# EUROPÄISCHE PATENTSCHRIFT

(11) **EP 2 429 851 B1**
(45) Veröffentlichungstag und Bekanntmachung des Hinweises auf die Patenterteilung: **26.09.2012**
(21) Anmeldenummer: 10719938.2
(22) Anmeldetag: 07.05.2010
(51) Int. Cl.: B60K 17/28

(54) **ANTRIEBSANORDNUNG FÜR EIN KRAFTFAHRZEUG MIT EINER NEBENABTRIEBSKUPPLUNG**
DRIVE ASSEMBLY FOR A MOTOR VEHICLE, COMPRISING A POWER TAKE-OFF CLUTCH
DISPOSITIF D'ENTRAÎNEMENT POUR UN VÉHICULE À MOTEUR COMPORTANT UN EMBRAYAGE À PRISE DE FORCE

(30) Priorität: 14.05.2009 DE 102009003107
(43) Veröffentlichungstag der Anmeldung: 21.03.2012
(73) Patentinhaber: ZF Friedrichshafen AG, 88038 Friedrichshafen (DE)
(72) Erfinder: HUNOLD, Bernard, 88046 Friedrichshafen (DE); LUEBKE, Eckhardt, 88048 Friedrichshafen (DE)
(86) Internationale Anmeldenummer: PCT/EP2010/056244
(87) Internationale Veröffentlichungsnummer: WO 2010/130648

(56) Entgegenhaltungen:
- DE-A1-102007 053 674

## Beschreibung

Die Erfindung betrifft eine Antriebsanordnung für ein Kraftfahrzeug, mit einer eingangsseitigen Kupplungsvorrichtung, mit einem Getriebe mit einer Getriebeeingangswelle und einer Getriebeausgangswelle, mit Getriebegänge bildenden sowie auf Getriebewellen angeordneten Los- und Festrädern, mit Schaltvorrichtungen zum bedarfsweise drehfesten Koppeln der Losräder an zumindest eine der Getriebewellen, mit einem Nebenabtriebszahnrad, welches von der Eingangsseite der Kupplungsvorrichtung antreibbar ist, und mit einer Nebenabtriebskupplung zum Einschalten des Nebenabtriebszahnrads in den Momentenfluss, wobei die Nebenabtriebskupplung im Momentenfluss hinter sowie axial benachbart zu einer Anfahr- und Schaltkupplung angeordnet ist.

Konventionelle Antriebsanordnungen für Kraftfahrzeuge können neben einer Anfahr- und Schaltkupplung für ein Fahrgetriebe einen Nebenabtrieb aufweisen, mittels dem Arbeitsgeräte antreibbar sind, welche nicht der Fortbewegung des Fahrzeugs dienen. Ein solcher Nebenabtrieb umfasst beispielsweise eine dreirädrige Zahnradstufe, welche von der Eingangsseite der Anfahr - und Schaltkupplung antreibbar ist und ausgangsseitig eine Nebenabtriebswelle antreiben kann. Damit diese Nebenabtriebswelle bei laufendem Antriebsmotor nicht ständig mitdreht, ist üblicherweise eine schaltbare Nebenabtriebskupplung vorgesehen, welche radial außerhalb des Gehäuses der Anfahr- und Schaltkupplung sowie radial außerhalb des Fahrgetriebes angeordnet ist. Eine solche Antriebsanordnung mit einer reibschlüssigen Anfahr- und Schaltkupplung und einer ebenfalls reibschlüssigen Nebenabtriebskupplung ist beispielsweise aus der DE 101 52 859 A1 bekannt, während die DE 26 56 669 C2 eine Antriebsanordnung mit einem hydrodynamischen Drehmomentwandler mit Überbrückungskupplung und eine reibschlüssigen Nebenabtriebskupplung offenbart.

Nachteilig an diesen bekannten Antriebsanordnungen ist, dass die Anordnung der reibschlüssigen Nebenabtriebskupplung radial außen vergleichsweise viel Bauraum beansprucht. Eine konstruktive Verbesserung zeigt das Getriebe mit einem Nebenabtrieb gemäß der gattungsgemäßen DE 102007053674 A1, bei dem die Anfahr- und Schaltkupplung reibschlüssig und die Nebenabtriebskupplung als nicht synchronisierte Klauenkupplung ausgebildet ist. Dabei ist die Klauenkupplung im Momentenfluss hinter der Anfahr- und Schaltkupplung angeordnet und in einer ersten Ausführungsform von der Ausgangsseite der Anfahr- und Schaltkupplung antreibbar. Konkret ist die Klauenkupplung dazu axial zwischen der Anfahr- und Schaltkupplung und dem Fahrgetriebe sowie radial innen im Bereich einer Getriebeeingangswelle angeordnet, wobei die Getriebeeingangswelle mit der Ausgangsseite der Anfahr- und Schaltkupplung verbunden ist.

Wenngleich diese Antriebsanordnung gemäß der DE 10 2007 053 674 A1 einige Vorteile gegenüber den Antriebsanordnungen gemäß der DE 101 52 859 A1 und der DE 26 56 669 C2 hinsichtlich des radial außen notwenigen Bauraumes aufweist, so bestehen dennoch weitere Möglichkeiten für technische Verbesserungen. So ist die Nebenabtriebskupplung zusammen mit den Zahnrädern des Nebenabtriebs in einem gesonderten, so genannten Adaptergehäuse untergebracht, welches das Gesamtgewicht der Antriebsanordnung nachteilig erhöht. Sofern der Nebenabtrieb von der Eingangsseite der Anfahr - und Schaltkupplung angetrieben werden soll, ist gemäß einer zweiten Ausführungsform der DE 10 2007 053 674 A1 vorgesehen, dass zusätzlich zu der beschriebenen Nebenantriebskupplung eine so genannte Unabhängigkeitsklaue vorhanden ist, mittels der das eingangsseitige Zahnrad der Nebenabtriebszahnradstufe mit der Eingangsseite der Anfahr- und Schaltkupplung verbindbar ist. Diese Unabhängigkeitsklaue ist zwar im Bereich eines die Anfahr - und Schaltkupplung aufnehmenden Eingangsgehäuses angeordnet, innerhalb diesem jedoch axial fern von der Anfahr- und Schaltkupplung sowie radial nahe an der Getriebeeingangswelle.

Vor diesem Hintergrund liegt der Erfindung die Aufgabe zugrunde, eine Antriebsanordnung der im Oberbegriff des Anspruchs 1 genannten Art derart zu verbessern, dass der für diese Antriebsanordnung notwendige radiale und axiale Bauraum gegenüber bekannten Antriebsanordnungen reduziert ist. Außerdem soll es möglich sein, vergleichsweise hohe Drehmomente über die Nebenabtriebskupplung übertragen zu können und den Bauraum für die Aktuatoren von Anfahr- und Schaltkupplung sowie Nebenabtriebskupplung möglichst gering zu halten.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass die gestellte Aufgabe gelöst werden kann, wenn die Anfahr- und Schaltkupplung sowie die Nebenabtriebskupplung in einer Doppelkupplung baulich zusammengefasst werden, wobei die Anfahr- und Schaltkupplung als Reibkupplung und die Nebenabtriebskupplung als Klauenkupplung ausgebildet ist.

Die Erfindung geht demnach aus von einer Antriebsanordnung für ein Kraftfahrzeug, mit einer eingangsseitigen Kupplungsvorrichtung, mit einem Getriebe mit einer Getriebeeingangswelle und einer Getriebeausgangswelle, mit Getriebegänge bildenden sowie auf Getriebewellen angeordneten Los- und Festrädern, mit Schaltvorrichtungen zum bedarfsweise drehfesten Koppeln der Losräder an zumindest einer der Getriebewellen, mit einem Nebenabtriebszahnrad, welches von der Eingangsseite der Kupplungsvorrichtung antreibbar ist, und mit einer Nebenabtriebskupplung zum Einschalten des Nebenabtriebszahnrads in den Momentenfluss, wobei die Nebenabtriebskupplung axial benachbart zu dieser Anfahr- und Schaltkupplung angeordnet ist.

Zur Lösung der gestellte Aufgabe ist zudem vorgesehen, dass die Kupplungsvorrichtung als Doppelkupplungsvorrichtung ausgebildet sind, welche die Anfahr- und Schaltkupplung, die Nebenabtriebskupplung sowie zwei den beiden Kupplungen jeweils zugeordnete Kupplungsaktuatoren umfasst, dass die Anfahr- und Schaltkupplung als Reibkupplung und die Nebenabtriebskupplung als Klauenkupplung ausgebildet ist, dass diese beiden Kupplungen einen gemeinsamen Kupplungsdeckel sowie ein gemeinsames Aktuatorgehäuse aufweisen, und dass die Kupplungsmittel der Nebenabtriebskupplung radial außen im Bereich des Kupplungsdeckels angeordnet sind.

Durch die axial und radial eng benachbarte Anordnung der Kupplungsmittel von Anfahr- und Schaltkupplung sowie Nebenabtriebskupplung ist es möglich, deren Aktuatoren radial und axial geschachtelt zueinander anzuordnen, wodurch eine axial sehr kurze Doppelkupplungsanordnung geschaffen ist. Zudem kann bei dieser Konstruktion die Klauenschaltvorrichtung der Nebenabtriebskupplung radial sehr weit außen angeordnet werden, so dass vergleichsweise hohe Drehmomente über diese Klauenkupplung übertragbar sind. Außerdem ist die Anordnung der Verzahnungen der Klauenkupplung an einem möglichst großen Wirkdurchmesser vorteilhaft hinsichtlich geringer Selbsthaltekräfte bei angeschrägten Klauenzähnen. Schließlich wird durch die Anordnung der Nebenabtriebskupplung im Bauraum radial innerhalb der Anfahr- und Schaltkupplung das Gehäuse des Fahrgetriebes bzw. eines gegebenenfalls notwendigen Adaptergehäuses für den Zahnradsatz des Nebenabtriebs axial sehr kurz gehalten.

So ist gemäß einem besonderen Konstruktionsmerkmal der Antriebsanordnung gemäß der Erfindung vorgesehen, dass die Nebenabtriebskupplung radial und axial innerhalb des Bauraumes eines axialen Fortsatzes einer Druckplatte der Anfahr- und Schaltkupplung angeordnet ist.

Gemäß einer anderen Ausbildungsform ist vorgesehen, dass die Anfahr - und Schaltkupplung eingangsseitig mit dem Kupplungsdeckel und ausgangsseitig mit der Getriebeeingangswelle verbunden ist.

Ein weiteres konstruktives Merkmal besteht darin, dass die Nebenabtriebskupplung ebenfalls eingangsseitig mit dem Kupplungsdeckel und ausgangsseitig mit einer Hohlwelle verbunden ist, wobei die Hohlwelle auf der Getriebeeingangswelle drehbar gelagert ist, und wobei an der Hohlwelle das Nebenabtriebszahnrad befestigt oder ausgebildet ist. Dieses Nebenabtriebszahnrad kämmt in konventioneller Weise mit einem weiteren Zahnrad des Nebenabtriebs, welches seinerseits ein auf einer Nebenabtriebswelle befestigtes Zahnrad antreibt.

In weiterer Ausgestaltung der Antriebsanordnung ist vorgesehen, dass die Anfahr- und Schaltkupplung und die Nebenabtriebskupplung jeweils einen Torsionsschwingungsdämpfer aufweisen, mittels denen Drehschwingungen der Kurbelwelle einer die Antriebsanordnung antreibenden Brennkraftmaschine gedämpft werden.

Weiter ist in diesem Zusammenhang konstruktiv vorgesehen, dass der Torsionsschwingungsdämpfer der Nebenabtriebskupplung mit einer radial innen angeordneten Hülse verbunden ist, die drehfest mit der das Abtriebszahnrad tragenden Hohlwelle verbunden ist, dass der Torsionsschwingungsdämpfer der Nebenabtriebskupplung zumindest ein federelastisches Element aufweist, und dass der Torsionsschwingungsdämpfer der Nebenabtriebskupplung radial außen mit einer Mitnehmerscheibe verbunden ist, welche im Bereich ihres radialen Endes eine stirnseitige Verzahnung aufweist.

Zudem ist in weiterer Ausgestaltung der Erfindung vorgesehen, dass die Anfahr- und Schaltkupplung eine Tellerfeder aufweist, die an dem Kupplungsdeckel befestigt und von einem Stellglied eines Aktuators betätigbar ist. Dabei ist die Anfahr- und Schaltkupplung beispielsweise als eine im unbetätigten Zustand geschlossene Reibkupplung ausgebildet.

Daher weist die Anfahr- und Schaltkupplung die bereits erwähnte Druckplatte auf, welche von der Tellerfeder im unbetätigten Zustand dieser Kupplung mit einer Schließkraft beaufschlagt wird. Als besonderes konstruktives Merkmal weist die Druckplatte radiale Öffnungen auf, durch die Ringsegmente mit Spiel nach radial innen hindurchragen. Diese Ringsegmente sind an der radialen Innenseite des Kupplungsdeckels angeordnet und mit diesem drehfest verbunden. Außerdem weisen diese Ringsegmente an ihrer axial zur Nebenabtriebskupplung ausgerichteten Stirnseite eine Stirnverzahnung auf und stellen das zweite Schaltelement der als Klauenkupplung ausgebildeten Nebenabtriebskupplung dar. Die kupplungsseitige Stirnverzahnung kann auch in den mit der Druckplatte der Kupplung verbundenen Teil der Kupplung integriert sein. Die Stirnverzahnung der Mitnehmerscheibe ist auch in Segmentbauweise ausführbar, wobei die Segmentierung beispielsweise über Zentrierungen an der Mitnehmerscheibe erfolgt.

Die genannten Schaltelemente der als Klauenkupplung ausgebildeten Nebenabtriebskupplung sind nun derartig ausgebildet und zueinander angeordnet, dass die Stirnverzahnungen der Ringsegmente und die Stirnverzahnung der Mitnehmerscheibe im gekuppelten Zustand der Nebenabtriebskupplung formschlüssig ineinander greifen.

Weiter ist vorgesehen, dass die Nebenabtriebskupplung mittels eines Aktuators betätigbar ist, der einen Betätigungskolben aufweist, welcher zum Schließen der Nebenabtriebskupplung axial gegen die verzahnungslose Stirnseite der Mitnehmerscheibe des zweiten Torsionsschwingungsdämpfers pressbar ist, welche axial gegenüber der mit der Stirnverzahnung versehenen Stirnseite angeordnet ist, wobei das zumindest eine federelastische Element des zweiten Torsionsschwingungsdämpfers derart ausgebildet ist, dass dieses eine axiale Auslenkung der Mitnehmerscheibe in Richtung zu den Stirnverzahnungen der Ringsegmente ermöglicht.

In diesem Zusammenhang sieht eine bevorzugte Weiterbildung der Erfindung vor, dass das zumindest eine federelastische Element des zweiten Torsionsschwingungsdämpfers, also des Torsionsschwingungsdämpfers der Nebenabtriebskupplung, derart ausgebildet ist, dass der Betätigungskolben des Aktuators der Nebenabtriebskupplung im unbetätigten Zustand von diesem federelastischen Element in seine Öffnungsposition gedrückt wird. Durch dieses konstruktive Merkmal benötigt der Betätigungskolben des Aktuators der Nebenabtriebskupplung kein gesondertes Rückstellmittel, um aus seiner Betätigungsstellung in seine Nichtbetätigungsstellung gebracht zu werden.

In weiterer Ausgestaltung der Erfindung kann vorgesehen sein, dass die Stirnverzahnungen an den Ringsegmenten und an der Mitnehmerscheibe der Klauenkupplung der Nebenabtriebskupplung axial ausgerichtete, gerade Zahnflanken aufweisen. Dadurch sind die Zahnflanken nicht selbstabweisend ausgebildet, so dass bei einer Drehmomentübertragung über die Nebenabtriebskupplung wegen der Reibkräfte an den Zahnflanken keine oder nur vergleichsweise geringe Druckkräfte des zugeordneten Betätigungskolbens notwendig sind, um die Nebenabtriebskupplung geschlossen zu halten.

Gemäß einer anderen Ausgestaltung der Erfindung ist vorgesehen, dass die Stirnverzahnungen an den Ringsegmenten des Kupplungsgehäuses und an der Mitnehmerscheibe der Nebenabtriebskupplung schräge Zahnflanken aufweisen. Dadurch sind die Zahnflanken selbstabweisend ausgebildet, so dass bei einem Unterschreiten eines durch die Zahnflankengeometrie und die Reibkräfte vorgegebenen geringen Drehmoments bzw. Haltemoments die Mitnehmerscheibe durch die Wirkung des federelastischen Elements des Torsionsschwingungsdämpfers der Nebenabtriebskupplung und Nichtanliegen einer Haltekraft des Betätigungskolbens in ihre Ausrückposition zurückgestellt wird.

Die Antriebsanordnung gemäß der Erfindung umfasst beispielsweise ein Getriebe, welches als Gruppengetriebe mit einem Splitgetriebe, einem Hauptgetriebe sowie wahlweise einem Bereichsgetriebe ausgebildet ist. In Weiterbildung dieses Getriebes kann dieses dadurch gekennzeichnet sein, dass das Splitgetriebe und das Hauptgetriebe baulich zusammengefasst sind und eine Getriebeeingangswelle, eine Hauptgetriebewelle und zwei parallel dazu angeordnete Vorgelegewellen aufweist.

Die Antriebsanordnung gemäß der Erfindung wird nachfolgend anhand eines Ausführungsbeispiels weiter erläutert. Dazu ist der Beschreibung eine Zeichnung mit zwei Zeichnungsfiguren beigefügt. In dieser zeigt
- Fig. 1: eine teilweise schematische Längsschnittdarstellung durch eine Antriebsanordnung eines Kraftfahrzeuges mit einer Kupplungsvorrichtung und einem als Gruppengetriebe ausgebildeten Fahrzeuggetriebe, sowie
- Fig. 2: die Kupplungsvorrichtung aus der Fig. 1 in vergrößerter Darstellung.

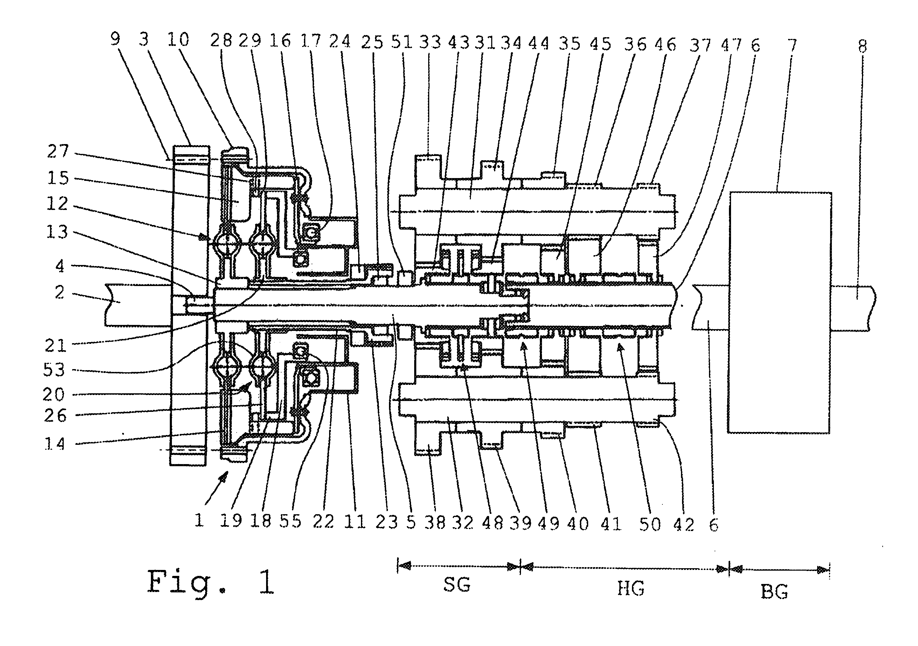

Demnach zeigt Fig. 1 eine Antriebsanordnung für ein Kraftfahrzeug, vorzugsweise für ein Nutzfahrzeug, mit einer als Doppelkupplung 1 a, 1 b ausgebildeten Kupplungsvorrichtung 1 und einem als Gruppengetriebe SG, HG, BG ausgebildeten Stufenwechselgetriebe. Das Kupplungsgehäuse 10 der Kupplungsvorrichtung 1 ist über eine Schraubverbindung 9 mit einer Schwungsscheibe 3 verbunden, die drehfest an der Kurbelwelle 2 einer nicht dargestellten Brennkraftmaschine befestigt ist. Über das Kupplungsgehäuse 10 sind die Eingangsseiten der beiden Kupplungen 1 a, 1 b der Kupplungsvorrichtung 1 antreibbar.

Die Kupplungsvorrichtung 1 weist dabei eine als Reibkupplung ausgebildete Anfahr- und Schaltkupplung 1 a sowie eine als unsynchronisierte Klauenkupplung ausgebildete Nebenabtriebskupplung 1 b auf. Die Ausgangsseite der Anfahr- und Schaltkupplung 1a ist mit der Getriebeeingangswelle 5 verbunden, und die Ausgangsseite der Nebenabtriebskupplung 1 b weist ein Nebenabtriebszahnrad 23 auf, welches über eine nicht weiter dargestellte Stirnradstufe eine radial außen angeordnete Nebenabtriebswelle antreibt.

Das Gruppengetriebe weist ein Splitgetriebe SG mit zwei Eingangskonstanten auf, deren Losräder 43 und 44 die auf der Getriebeeingangswelle 5 drehbar gelagert und mit zugeordneten Festrädern 33, 34; 38, 39 auf zwei Vorgelegewellen 31, 32 in Zahneingriff sind. Die Losräder 43 und 44 sind mittels einer zweiseitig wirksamen synchronisierten Schalteinrichtung 48 mit der Getriebeeingangswelle 5 drehfest verbindbar. Am antriebsmotornahen Ende des Gruppengetriebe SG, HB, BG ist die Getriebeeingangswelle 5 über ein Wälzlager 51 radial an einem nicht dargestellten Getriebegehäuse abgestützt.

Weiter verfügt das Gruppengetriebe über ein Hauptgetriebe HG, welches drei Gangstufen mit auf einer Hauptgetriebewelle 6 drehbar angeordneten Losrädern 45, 46, 47 sowie jeweils zugeordneten Festräder 35, 36, 37; 40, 41, 42 auf den beiden Vorgelegewellen 31, 32 aufweist. Zum drehfesten Verbinden dieser Losräder 45, 46, 47 mit der Hauptgetriebewelle 6 sind jeweils zugeordnete Schalteinrichtungen 49, 50 vorgesehen.

An dem Hauptgetriebe HG schließt sich ein Bereichsgetriebe BG an, welches hier nur schematisch dargestellt ist und als einfaches Planetengetriebe 7 ausgebildet ist. Die Eingangsseite dieses Bereichsgetriebes BG wird durch die Hauptgetriebewelle 6 gebildet, während als Ausgang dieses Bereichsgetriebes BG eine Getriebeausgangswelle 8 vorgesehen ist. Diese Getriebeausgangswelle 8 treibt ein nicht dargestelltes Achsgetriebe an, welches zu den Fahrzeugrädern führende Antriebswellen antreibt.

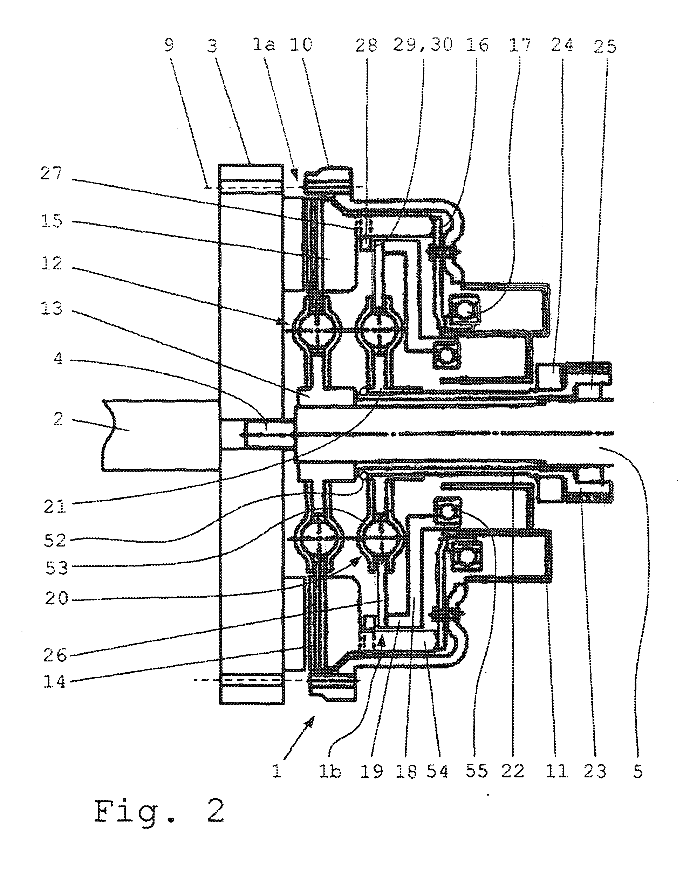

Von besonderer Bedeutung für die Antriebsanordnung gemäß der Erfindung ist die vor dem Gruppengetriebe SG, HG, BG angeordnete Kupplungsvorrichtung 1, da deren Konstruktion eine axial besonders kurze sowie radial klein bauende Antriebsanordnung ermöglicht. Der spezielle Aufbau dieser Antriebsanordnung ist besonders gut in Fig. 2 erkennbar.

Wie bereits erwähnt, ist die als Doppelkupplung ausgebildete Kupplungsvorrichtung 1 eingangsseitig von der Kurbelwelle 2 einer Brennkraftmaschine antreibbar, welche über eine Schwungsscheibe 3 mit dem Kupplungsgehäuse 10 drehfest verbunden ist. Wie Fig. 2 verdeutlicht, sitzt die Schwungscheibe 3 hierzu auch auf einem axialen Zapfen 4 der Getriebeeingangswelle 5, wobei sich letztere vollständig durch die Kupplungsvorrichtung 1 erstreckt.

Die als Reibkupplung ausgebildete Anfahr- und Schaltkupplung 1 a ist axial unmittelbar neben der Schwungsscheibe 3 angeordnet. Sie umfasst radial innen eine mit der Getriebeeingangswelle 5 drehfest verbundene Hülse 13, an der radial mittig ein erster Torsionsschwingungsdämpfer 12 ausgebildet ist. Die Federmittel dieses Torsionsschwingungsdämpfers 12 sind radial außen in an sich bekannter Weise mit einer Kupplungsscheibe 14 verbunden, welche mit ihrem Reibbelag von einer Druckplatte 15 axial gegen die Schwungscheibe 3 pressbar ist. Dazu ist die Druckplatte 15 radial innerhalb des Kupplungsgehäuses 10 angeordnet sowie an diesem axial geführt. Als Führungshilfen dienen vom Kupplungsgehäuse 10 radial nach innen mit Spiel durch radiale Öffnungen 27 in der Druckplatte 15 ragende Ringsegmente 28, denen noch eine weitere Bedeutung im Zusammenwirken mit der Nebenabtriebskupplung 1 b zukommt.

Die Druckplatte 15 der Anfahr- und Schaltkupplung 1 a wird von einer an dem Kupplungsgehäuse 10 schwenkbar befestigten Tellerfeder 16 ständig in Schließrichtung gegen die Kupplungsscheibe 14 gedrückt, so dass die Anfahr - und Schaltkupplung 1 a unbetätigt geschlossen ist. Zum Betätigen bzw. Öffnen der Anfahr- und Schaltkupplung 1 a wird ein nicht weiter dargestellter druckmittelbetätigter Aktuator aktiviert, der die Tellerfeder 16 über ein Ausrücklager 17 in ihre Öffnungsstellung bewegt. Das Ausrücklager 17 ist in einem für beide Kupplungen 1 a, 1 b gemeinsames Aktuatorgehäuse 11 angeordnet und an diesem abgestützt. Ein von der Kurbelwelle 2 kommendes Antriebsdrehmoment gelangt demnach über die Schwungsscheibe 3, das Kupplungsgehäuse 10, die Tellerfeder 16, die Druckplatte 15, die Kupplungsscheibe 14, den ersten Torsionsschwingungsdämpfer 12 und die Hülse 13 zur Getriebeeingangswelle 5.

Wie bereits erwähnt umfasst die als Doppelkupplung ausgebildete Kupplungsvorrichtung 1 auch eine als Klauenkupplung ausgebildete Nebenabtriebskupplung 1 b, welche axial unmittelbar neben der als Reibkupplung ausgebildeten Anfahr- und Schaltkupplung 1 a angeordnet ist. Diese Nebenabtriebskupplung 1 b weist radial innen eine Hülse 21 auf, an der radial mittig ein zweiter Torsionsschwingungsdämpfer 20 ausgebildet ist. Die Hülse 21 der Nebenabtriebskupplung 1 b ist drehfest an einer Hohlwelle 22 befestigt, die auf der Getriebeeingangswelle 5 gleitgelagert oder wälzgelagert angeordnet ist. Die Hohlwelle 22 trägt an ihrem antriebsmotorfernen Ende das bereits erwähnte Nebenabtriebszahnrad 23, welches über ein Wälzlager 24 an einem Gehäuse und über ein Wälzlager 25 auf der Getriebeeingangswelle 5 zusätzlich radial und axial gelagert ist. Außerdem ist ein in eine Ringnut in der Hohlwelle 22 eingesetzter Sicherungsring 52 erkennbar, an dem sich die Hülse 21 des zweiten Torsionsschwingungsdämpfers 20 axial abstützt.

Das zumindest eine federelastische Element 53 dieses zweiten Torsionsschwingungsdämpfers 20 ist radial außen mit einer Mitnehmerscheibe 26 verbunden und derart ausgelegt sowie angeordnet, dass die Mitnehmerscheibe 26 mit ihrem radial äußeren Ende axial in Richtung zu den bereits erwähnten Ringssegmenten 28 auslenkbar ist.

Um eine solche axiale Auslenkung der Mitnehmerscheibe 26 zu erreichen, ist ein Kolben 18 eines nicht im Detail dargestellten druckmittelbetätigbaren Aktuators vorgesehen, der mit einem ringförmigen axialen Vorsprung 19 gegen die von der Anfahr- und Schaltkupplung 1 a wegweisenden Stirnseite der Mitnehmerscheibe 26 der Nebenabtriebskupplung 1 b pressbar ist. Hierzu ist der Kolben 18 des Nebenabtriebsaktuators in einem Bereich der Kupplungsvorrichtung 1 angeordnet, der von einem axialen Fortsatz 54 der Druckplatte 15 der Anfahr- und Schaltkupplung 1 a sowohl radial als auch axial überdeckt wird. Der Kolben 18 ist zudem im gemeinsamen Aktuatorgehäuse 11 über ein Ausrücklager 55 axial verschiebbar gelagert und an diesem abgestützt.

Zur Ausbildung als Schaltelement einer unsynchronisierte Klauenkupplung 1 b weist die Mitnehmerscheibe 26 an ihrer axial zu den Ringsegmenten 28 weisenden Stirnseite eine Verzahnung 30 auf, deren Zähne in ihrer Längserstreckung demnach radial nach außen gerichtet sind. Außerdem ist an den radial nach innen weisenden Ringsegmenten 28 jeweils eine dazu korrespondierende stirnseitige Verzahnung 29 ausgebildet. Ein Betätigen des Kolbens 18 der Aktuators der Nebenabtriebskupplung führt daher zu einem formschlüssigen Verbinden der Mitnehmerscheibe 26 mit den Ringsegmenten 28 bzw. letztlich mit dem Kupplungsgehäuse 10, so dass ein Antriebsdrehmoment von der Kurbelwelle 2 über die Schwungsscheibe 3, das Kupplungsgehäuse 10, die Ringsegmente 28, die Mitnehmerscheibe 26, die Hülse 21 und die Hohlwelle 22 zu dem Nebenabtriebszahnrad 23 leitbar ist.

Sofern die Zähne der stirnseitigen Verzahnungen 29, 30 der Ringsegmente 28 und der Mitnehmerscheibe 26 gerade Zahnflanken aufweisen, also Zahnflanken, die im wesentlichen axial ausgerichtet sind, dann wirkt die Nebenabtriebskupplung 1 b bei der Übertragung eines ausreichend hohen Drehmomentes selbsthaltend, und zwar sogar dann, wenn die Betätigungskraft am Kolben 18 des Nebenabtriebsaktuators fast vollständig weggenommen wird.

Wenn dagegen die Zähne der stirnseitigen Verzahnungen 29, 30 der Ringsegmente 28 und der Mitnehmerscheibe 26 schräge Zahnflanken aufweisen, also Zahnflanken, die von der Längsmittelachse der Antriebsanordnung weg weisen, dann wirkt die Nebenabtriebskupplung 1 b bei der Übertragung eines Drehmomentes autonom abweisend, so dass zum geschlossen halten der Nebenabtriebskupplung 1 b ständig eine Betätigungskraft am Kolben 18 des Nebenabtriebsaktuators aufrecht erhalten bleiben muss. Vorteilhaft ist bei dieser letztgenannten Ausführungsform jedoch, dass bei einem Wegbleiben der Betätigungskraft die Nebenabtriebskupplung 1 b autonom, also allein durch die Rückstellkraft der Federmittel 53 des zweiten Torsionsschwingungsdämpfers 20, geöffnet und damit der Nebenabtrieb ausgeschaltet wird. Zudem kann eine solche Nebenabtriebskupplung 1 b auch während der Übertragung eines hohen Drehmoments im Nebenabtrieb ohne große Betätigungskraft geöffnet und damit der Nebenabtrieb ausgeschaltet werden. Die Anordnung der Schaltelemente (Stirnverzahnungen 29, 30) an einem großen Wirkdurchmesser ist dazu besonders vorteilhaft.

Neben der am Ausführungsbeispiel erläuterten radialen Ausrichtung der Stirnverzahnungen 29, 30 an den Ringsegmenten 28 und an der Mitnehmerscheibe 26 können diese gemäß einer anderen Ausführungsform auch als Axialverzahnungen ausgebildet sein.

Sofern die Rückstellkraft des federelastischen Elements 53 des zweiten Torsionsschwingungsdämpfers 20 auf die Mitnehmerscheibe 26 der Nebenabtriebskupplung 1 b nicht ausreicht, um diese bei Bedarf in ihre Nichtbetätigungsstellung zurückzuführen, so kann durch eine einfache konstruktive Maßnahme für diesen Zweck zumindest eine andere Rückstellfeder vorgesehen sein.

Es wurde deutlich, dass durch die Anordnung der Nebenabtriebskupplung außerhalb des Getriebegehäuses, also im Trockenraum bzw. Kupplungsgehäuse (Kupplungsdeckel 10) der Anfahr- und Schaltkupplung 1 a, keine getriebeseitigen Aktuatoren benötigt werden, um den Nebenabtrieb ein- oder auszuschalten. Auch dieses verkürzt den Antriebsstrang in vorteilhafter Weise und reduziert die Komplexität des Getriebes SG, HG, BG.

Außerdem kann bei der vorgeschlagenen Kupplungsanordnung 1 die Nebenabtriebskupplung 1 b modulartig mit einer bereits vorhandenen Anfahr - und Schaltkupplung 1 a kombiniert werden, wobei sich die Nebenabtriebskupplung 1 b einseitig in das Kupplungsgehäuse integrieren lässt. Zudem kann die hier vorgeschlagene Kupplungsanordnung 1 mit Anfahr- und Schaltkupplung 1 a sowie Nebenabtriebskupplung 1 b aus einer bereits vorhandenen Doppelkupplung konstruktiv abgeleitet werden.

### Bezugszeichen

- 1: Kupplungsvorrichtung
- 1a: Anfahr- und Schaltkupplung
- 1b: Nebenabtriebskupplung
- 2: Kurbelwelle
- 3: Schwungscheibe
- 4: Zapfen an Getriebeeingangswelle
- 5: Getriebeeingangswelle
- 6: Hauptgetriebewelle
- 7: Planetengetriebe
- 8: Getriebeausgangswelle
- 9: Schraubverbindung
- 10: Kupplungsdeckel
- 11: Aktuatorgehäuse
- 12: Erster Torsionsschwingungsdämpfer
- 13: Hülse des ersten Torsionsschwingungsdämpfers
- 14: Kupplungsscheibe der Anfahr- und Schaltkupplung
- 15: Druckplatte der Anfahr- und Schaltkupplung
- 16: Tellerfeder des Aktuators der Anfahr- und Schaltkupplung
- 17: Ausrücklager des Aktuators der Anfahr- und Schaltkupplung
- 18: Kolben des Aktuators der Anfahr- und Schaltkupplung
- 19: Axialer Vorsprung des Kolbens 18
- 20: Zweiter Torsionsschwingungsdämpfer
- 21: Hülse des zweiten Torsionsschwingungsdämpfers
- 22: Hohlwelle am Nebenabtriebszahnrad
- 23: Nebenabtriebszahnrad
- 24: Erstes Wälzlager am Nebenabtriebszahnrad
- 25: Zweites Wälzlager am Nebenabtriebszahnrad
- 26: Mitnehmerscheibe an dem zweiten Torsionsschwingungsdämpfer
- 27: Radiale Öffnung in der Druckplatte der Anfahr- und Schaltkupplung
- 28: Ringssegment der Klauenkupplung
- 29: Stirnverzahnung am Ringsegment 28
- 30: Stirnverzahnung an Mitnehmerscheibe 26
- 31: Erste Vorgelegewelle
- 32: Zweite Vorgelegewelle
- 33: Festrad auf der ersten Vorgelegewelle
- 34: Festrad auf der ersten Vorgelegewelle
- 35: Festrad auf der ersten Vorgelegewelle
- 36: Festrad auf der ersten Vorgelegewelle
- 37: Festrad auf der ersten Vorgelegewelle
- 38: Festrad auf der zweiten Vorgelegewelle
- 39: Festrad auf der zweiten Vorgelegewelle
- 40: Festrad auf der zweiten Vorgelegewelle
- 41: Festrad auf der zweiten Vorgelegewelle
- 42: Festrad auf der zweiten Vorgelegewelle
- 43: Losrad auf Getriebeeingangswelle
- 44: Losrad auf Getriebeeingangswelle
- 45: Losrad auf Hauptgetriebewelle
- 46: Losrad auf Hauptgetriebewelle
- 47: Losrad auf Hauptgetriebewelle
- 48: Schalteinrichtung
- 49: Schalteinrichtung
- 50: Schalteinrichtung
- 51: Wälzlager
- 52: Sicherungsring
- 53: Federelastisches Element am zweiten Torsionsschwingungsdämpfer
- 54: Axialer Fortsatz der Druckplatte 15
- 55: Ausrücklager des Aktuators der Nebenabtriebskupplung
- SG: Splitgetriebe
- HG: Hauptgetriebe
- BG: Bereichsgetriebe

## Patentansprüche

1. Antriebsanordnung für ein Kraftfahrzeug, mit einer eingangsseitigen Kupplungsvorrichtung (1), mit einem Getriebe mit einer Getriebeeingangswelle (5) und einer Getriebeausgangswelle (8), mit Getriebegänge bildenden sowie auf Getriebewellen (5, 6, 31, 32) angeordneten Los- und Festrädern, mit Schaltvorrichtungen (48, 49, 50) zum bedarfsweise drehfesten Koppeln der Losräder (43, 44, 45, 46, 47) an zumindest einer der Getriebewellen (5, 6), mit einem Nebenabtriebszahnrad (23), welches von der Eingangsseite der Kupplungsvorrichtung (1) antreibbar ist, und mit einer Nebenabtriebskupplung (1 b) zum Einschalten des Nebenabtriebszahnrads (23) in den Momentenfluss, wobei die Nebenabtriebskupplung (1 b) axial benachbart zu dieser Anfahr- und Schaltkupplung (1 a) angeordnet ist, **dadurch gekennzeichnet, dass** die Kupplungsvorrichtung (1) als Doppelkupplungsvorrichtung ausgebildet sind, welche die Anfahr- und Schaltkupplung (1a), die Nebenabtriebskupplung (1 b) sowie zwei den beiden Kupplungen (1 a, 1 b) jeweils zugeordnete Kupplungsaktuatoren umfasst, dass die Anfahr- und Schaltkupplung (1 a) als Reibkupplung und die Nebenabtriebskupplung (1 b) als Klauenkupplung ausgebildet ist, dass die beiden Kupplungen (1 a, 1 b) einen gemeinsamen Kupplungsdeckel (10) sowie ein gemeinsames Aktuatorgehäuse (11) aufweisen, und dass die Kupplungsmittel (28, 29, 30) der Nebenabtriebskupplung (1 b) radial außen im Bereich des Kupplungsdeckels (10) angeordnet sind.

2. Antriebsanordnung nach Anspruch 1, **dadurch gekennzeichnet, dass** die Nebenabtriebskupplung (1 b) radial sowie axial innerhalb des Bauraumes eines axialen Fortsatzes (54) einer Druckplatte (15) der Anfahr- und Schaltkupplung (1a) angeordnet ist.

3. Antriebsanordnung nach Anspruch 1 oder 2, **dadurch gekennzeichnet, dass** die Anfahr- und Schaltkupplung (1a) eingangsseitig mit dem Kupplungsdeckel (10) und ausgangsseitig mit der Getriebeeingangswelle (5) verbunden ist.

4. Antriebsanordnung nach einem der Ansprüche 1 bis 3, **dadurch gekennzeichnet, dass** die Nebenabtriebskupplung (1 b) eingangsseitig mit dem Kupplungsdeckel (10) und ausgangsseitig mit einer Hohlwelle (22) verbunden ist, dass die Hohlwelle (22) auf der Getriebeeingangswelle (5) drehbar gelagert ist, und dass an der Hohlwelle (22) das Nebenabtriebszahnrad (23) befestigt oder ausgebildet ist.

5. Antriebsanordnung nach einem der Ansprüche 1 bis 4, **dadurch gekennzeichnet, dass** die Anfahr- und Schaltkupplung (1a) und die Nebenabtriebskupplung (1 b) jeweils einen Torsionsschwingungsdämpfer (12, 20) aufweisen.

6. Antriebsanordnung nach Anspruch 5, **dadurch gekennzeichnet, dass** der Torsionsschwingungsdämpfer (20) der Nebenabtriebskupplung (1 b) mit einer radial innen angeordneten Hülse (21) verbunden ist, die drehfest mit der Hohlwelle (22) verbunden ist, dass der Torsionsschwingungsdämpfer (20) zumindest ein federelastisches Element (53) aufweist, und dass der Torsionsschwingungsdämpfer (20) radial außen mit einer Mitnehmerscheibe (26) verbunden ist, welche im Bereich ihres radialen Endes eine stirnseitige Verzahnung (30) aufweist.

7. Antriebsanordnung nach einem der Ansprüche 1 bis 6, **dadurch gekennzeichnet, dass** die Anfahr- und Schaltkupplung (1a) eine Tellerfeder (16) aufweist, die an dem Kupplungsdeckel (10) befestigt ist und von einem Stellglied betätigbar ist.

8. Antriebsanordnung nach Anspruch 7, **dadurch gekennzeichnet, dass** die Anfahr- und Schaltkupplung (1a) eine Druckplatte (15) aufweist, welche von der Tellerfeder (16) im unbetätigten Zustand dieser Kupplung (1 a) mit einer Schließkraft beaufschlagt wird, wobei die Druckplatte (15) radiale Öffnungen (27) aufweist, durch die Ringsegmente (28) nach radial innen mit Spiel hindurchragen.

9. Antriebsanordnung nach Anspruch 8, **dadurch gekennzeichnet, dass** die Ringsegmente (28) an der radialen Innenseite des Kupplungsdeckels (10) angeordnet und mit diesem drehfest verbunden sind.

10. Antriebsanordnung nach Anspruch 8 oder 9, **dadurch gekennzeichnet, dass** die Ringsegmente (28) an ihrer axial zur Nebenabtriebskupplung (1 b) ausgerichteten Stirnseite eine Stirnverzahnung (29) aufweisen.

11. Antriebsanordnung nach Anspruch 10, **dadurch gekennzeichnet, dass** die Stirnverzahnungen (29, 30) der Ringsegmente (28) und der Mitnehmerscheibe (26) im gekuppelten Zustand der Nebenabtriebskupplung (1 b) ineinander greifen.

12. Antriebsanordnung nach Anspruch 11, **dadurch gekennzeichnet, dass** die Nebenabtriebskupplung (1 b) einen Betätigungskolben (18) des zugeordneten Aktuators aufweist, welcher zum Schließen der Nebenabtriebskupplung (1 b) axial gegen eine verzahnungslose Stirnseite der Mitnehmerscheibe (26) pressbar ist, wobei das zumindest eine federelastische Element (53) des zweiten Torsionsschwingungsdämpfers (20) derart ausgebildet ist, dass dieses eine axiale Auslenkung der Mitnehmerscheibe (26) ermöglicht.

13. Antriebsanordnung nach Anspruch 12, **dadurch gekennzeichnet, dass** das zumindest eine federelastische Element (53) des zweiten Torsionsschwingungsdämpfers (20) derart ausgebildet ist, dass der Betätigungskolben (18) des Aktuators der Nebenabtriebskupplung (1 b) im unbetätigten Zustand von dem federelastischen Element (53) in seine Öffnungsposition gedrückt wird.

14. Antriebsanordnung nach einem der Ansprüche 1 bis 13, **dadurch gekennzeichnet, dass** die Stirnverzahnungen (29, 30) an den Ringsegmenten (28) und an der Mitnehmerscheibe (26) axial ausgerichtete, gerade Zahnflanken aufweisen.

15. Antriebsanordnung nach einem der Ansprüche 1 bis 13, **dadurch gekennzeichnet, dass** die Stirnverzahnungen (29, 30) an den Ringsegmenten (28) und an der Mitnehmerscheibe (26) schräge Zahnflanken aufweisen.

16. Antriebsanordnung nach einem der Ansprüche 1 bis 15, **dadurch gekennzeichnet, dass** das Getriebe als ein Gruppengetriebe mit einer Splitgetriebe (SP), einem Hauptgetriebe (HG) sowie wahlweise einem Bereichsgetriebe (BG) ausgebildet ist.

17. Antriebsanordnung nach einem der Ansprüche 1 bis 16, **dadurch gekennzeichnet, dass** das Splittgetriebe (SP) und das Hauptgetriebe (HG) baulich zusammengefasst sind und eine Getriebeeingangswelle (5), eine Hauptgetriebewelle (6) und zwei parallel dazu angeordnete Vorgelegewellen (31, 32) aufweist.

## Claims

1. Drive arrangement for a motor vehicle, having an input-side clutch device (1), having a transmission with a transmission input shaft (5) and with a transmission output shaft (8), with loose and fixed gears which form transmission gears and which are arranged on transmission shafts (5, 6, 31, 32), with shift devices (48, 49, 50) for coupling the loose gears (43, 44, 45, 46, 47) in a rotationally conjoint manner to at least one of the transmission shafts (5, 6) as required, having a power takeoff gearwheel (23) which can be driven by the input side of the clutch device (1), and having a power takeoff clutch (1b) for connecting the power takeoff gearwheel (23) into the torque flow, wherein the power takeoff clutch (1b) is arranged axially adjacent to said starting and shift clutch (1a), **characterized in that** the clutch device (1) is in the form of a dual clutch device which comprises the starting and shift clutch (1a), the power takeoff clutch (1b) and two clutch actuators assigned in each case to the two clutches (1a, 1b), **in that** the starting and shift clutch (1a) is in the form of a friction clutch and the power takeoff clutch (1b) is in the form of a jaw clutch, **in that** the two clutches (1a, 1b) have a common clutch cover (10) and a common actuator housing (11), and **in that** the clutch means (28, 29, 30) of the power takeoff clutch (1b) are arranged radially at the outside in the region of the clutch cover (10).

2. Drive arrangement according to Claim 1, **characterized in that** the power takeoff clutch (1b) is arranged radially and axially within the installation space of an axial projection (54) of a thrust plate (15) of the starting and shift clutch (1a).

3. Drive arrangement according to Claim 1 or 2, **characterized in that** the starting and shift clutch (1a) is connected at the input side to the clutch cover (10) and at the output side to the transmission input shaft (5).

4. Drive arrangement according to one of Claims 1 to 3, **characterized in that** the power takeoff clutch (1b) is connected at the input side to the clutch cover (10) and at the output side to a hollow shaft (22), **in that** the hollow shaft (22) is rotatably mounted on the transmission input shaft (5), and **in that** the power takeoff gearwheel (23) is fastened to or formed on the hollow shaft (22).

5. Drive arrangement according to one of Claims 1 to 4, **characterized in that** the starting and shift clutch (1a) and the power takeoff clutch (1b) each have a torsional vibration damper (12, 20).

6. Drive arrangement according to Claim 5, **characterized in that** the torsional vibration damper (20) of the power takeoff clutch (1b) is connected to a sleeve (21) which is arranged radially at the inside and which is connected in a rotationally conjoint manner to the hollow shaft (22), **in that** the torsional vibration damper (20) has at least one resiliently elastic element (53), and **in that** the torsional vibration damper (20) is connected, radially at the outside, to a driver disc (26) which has a toothing (30) on the face side in the region of its radial end.

7. Drive arrangement according to one of Claims 1 to 6, **characterized in that** the starting and shift clutch (1a) has a plate spring (16) which is fastened to the clutch cover (10) and which can be actuated by a control element.

8. Drive arrangement according to Claim 7, **characterized in that** the starting and shift clutch (1a) has a thrust plate (15) which, in the non-actuated state of said clutch (1a), is acted on with a closing force by the plate spring (16), wherein the thrust plate (15) has radial openings (27) through which ring segments (28) project radially inward with play.

9. Drive arrangement according to Claim 8, **characterized in that** the ring segments (28) are arranged on the radially inner side of the clutch cover (10) and are connected in a rotationally conjoint manner thereto.

10. Drive arrangement according to Claim 8 or 9, **characterized in that** the ring segments (28) have, on their face side directed towards the power takeoff clutch (1b), a spur toothing (29).

11. Drive arrangement according to Claim 10, **characterized in that** the spur toothings (29, 30) of the ring segments (28) and of the driver disc (26) engage into one another in the engaged state of the power takeoff clutch (1b).

12. Drive arrangement according to Claim 11, **characterized in that** the power takeoff clutch (1b) has an actuating piston (18) of the associated actuator, which actuating piston, to close the power takeoff clutch (1b), can be pressed axially against a non-toothed face side of the driver disc (26), wherein the at least one resiliently elastic element (53) of the second torsional vibration damper (20) is designed so as to permit an axial deflection of the driver disc (26).

13. Drive arrangement according to Claim 12, **characterized in that** the at least one resiliently elastic element (53) of the second torsional vibration damper (20) is designed such that the actuating piston (18) of the actuator of the power takeoff clutch (1b) is, in the non-actuated state, pushed into its opening position by the resiliently elastic element (53).

14. Drive arrangement according to one of Claims 1 to 13, **characterized in that** the spur toothings (29, 30) on the ring segments (28) and on the driver disc (26) have axially aligned, straight tooth flanks.

15. Drive arrangement according to one of Claims 1 to 13, **characterized in that** the spur toothings (29, 30) on the ring segments (28) and on the driver disc (26) have oblique tooth flanks.

16. Drive arrangement according to one of Claims 1 to 15, **characterized in that** the transmission is in the form of a group transmission with a splitter transmission (SP), a main transmission (HG) and optionally a range-change transmission (BG).

17. Drive arrangement according to one of Claims 1 to 16, **characterized in that** the splitter transmission (SP) and the main transmission (HG) are structurally combined and have a transmission input shaft (5), a main transmission shaft (6) and, arranged parallel thereto, two countershafts (31, 32).

## Revendications

1. Agencement d'entraînement pour un véhicule automobile, comprenant un dispositif d'embrayage (1) du côté de l'entrée, une boîte de vitesses avec un arbre d'entrée de boîte de vitesses (5) et un arbre de sortie de boîte de vitesses (8), avec des pignons fous et des pignons fixes formant des rapports de transmission et disposés sur des arbres de boîte de vitesses (5, 6, 31, 32), des dispositifs de commutation (48, 49, 50) pour l'accouplement solidaire en rotation, au besoin, des pignons fous (43, 44, 45, 46, 47) sur au moins l'un des arbres de boîte de vitesses (5, 6), une roue dentée de sortie auxiliaire (23), qui peut être entraînée par le côté d'entrée du dispositif d'embrayage (1), et un embrayage de sortie auxiliaire (1b) pour l'enclenchement de la roue dentée de sortie auxiliaire (23) dans le flux de couple, l'embrayage de sortie auxiliaire (1b) étant disposé axialement à côté de cet embrayage de démarrage et de commutation (1a), **caractérisé en ce que** le dispositif d'embrayage (1) est réalisé sous forme de dispositif d'embrayage double, qui comprend l'embrayage de démarrage et de commutation (1a), l'embrayage de sortie auxiliaire (1b) ainsi que deux actionneurs d'embrayage associés à chaque fois aux deux embrayages (1a, 1b), **en ce que** l'embrayage de démarrage et de commutation (1a) est réalisé sous forme d'embrayage de friction et l'embrayage de sortie auxiliaire (1b) est réalisé sous forme d'embrayage à griffes, **en ce que** les deux embrayages (1a, 1b) présentent un couvercle d'embrayage commun (10) ainsi qu'un boîtier d'actionneur commun (11), et **en ce que** les moyens d'embrayage (28, 29, 30) de l'embrayage de sortie auxiliaire (1b) sont disposés radialement à l'extérieur dans la région du couvercle d'embrayage (10).

2. Agencement d'entraînement selon la revendication 1, **caractérisé en ce que** l'embrayage de sortie auxiliaire (1b) est disposé radialement et axialement à l'intérieur de l'espace de construction d'une saillie axiale (54) d'une plaque de pression (15) de l'embrayage de démarrage et de commutation (1a).

3. Agencement d'entraînement selon la revendication 1 ou 2, **caractérisé en ce que** l'embrayage de démarrage et de commutation (1a) est connecté du côté de l'entrée au couvercle d'embrayage (10) et du côté de la sortie à l'arbre d'entrée de boîte de vitesses (5).

4. Agencement d'entraînement selon l'une quelconque des revendications 1 à 3, **caractérisé en ce que** l'embrayage de sortie auxiliaire (1b) est connecté du côté de l'entrée au couvercle d'embrayage (10) et du côté de la sortie à un arbre creux (22), **en ce que** l'arbre creux (22) est monté à rotation sur l'arbre d'entrée de boîte de vitesses (5) et **en ce que** la roue dentée de sortie auxiliaire (23) est fixée ou réalisée sur l'arbre creux (22).

5. Agencement d'entraînement selon l'une quelconque des revendications 1 à 4, **caractérisé en ce que** l'embrayage de démarrage et de commutation (1a) et l'embrayage de sortie auxiliaire (1b) présentent à chaque fois un amortisseur d'oscillations de torsion (12, 20).

6. Agencement d'entraînement selon a revendication 5, **caractérisé en ce que** l'amortisseur d'oscillations de torsion (20) de l'embrayage de sortie auxiliaire (1b) est connecté à une douille (21) disposée radialement à l'intérieur, qui est connectée de manière solidaire en rotation à l'arbre creux (22), **en ce que** l'amortisseur d'oscillations de torsion (20) présente au moins un élément élastique à ressort (53) et **en ce que** l'amortisseur d'oscillations de torsion (20) est connecté radialement à l'extérieur à un disque d'entraînement (26), qui présente, dans la région de son extrémité radiale, une denture frontale (30).

7. Agencement d'entraînement selon l'une quelconque des revendications 1 à 6, **caractérisé en ce que** l'embrayage de démarrage et de commutation (1a) présente un ressort Belleville (16) qui est fixé au couvercle d'embrayage (10) et qui peut être actionné par un organe de commande.

8. Agencement d'entraînement selon la revendication 7, **caractérisé en ce que** l'embrayage de démarrage et de commutation (1a) présente une plaque de pression (15) qui est sollicitée par le ressort Belleville (16) dans l'état non actionné de cet embrayage (1a) par une force de fermeture, la plaque de pression (15) présentant des ouvertures radiales (27) à travers lesquelles des segments annulaires (28) pénètrent radialement vers l'intérieur avec un certain jeu.

9. Agencement d'entraînement selon la revendication 8, **caractérisé en ce que** les segments annulaires (28) sont disposés sur le côté interne radial du couvercle d'embrayage (10) et sont connectés de manière solidaire en rotation à celui-ci.

10. Agencement d'entraînement selon la revendication 8 ou 9, **caractérisé en ce que** les segments annulaires (28) présentent, sur leur côté frontal orienté axialement vers l'embrayage de sortie auxiliaire (1b), une denture frontale (29).

11. Agencement d'entraînement selon la revendication 10, **caractérisé en ce que** les dentures frontales (29, 30) des segments annulaires (28) et du dispositif d'entraînement (26) viennent en prise l'un dans l'autre dans l'état embrayé de l'embrayage de sortie auxiliaire (1b).

12. Agencement d'entraînement selon la revendication 11, **caractérisé en ce que** l'embrayage de sortie auxiliaire (1b) présente un piston d'actionnement (18) de l'actionneur associé, qui peut être pressé axialement contre un côté frontal sans denture du disque d'entraînement (26) pour fermer l'embrayage de sortie auxiliaire (1b), l'au moins un élément élastique à ressort (53) du deuxième amortisseur d'oscillations de torsion (20) étant réalisé de telle sorte que celui-ci permette une déviation axiale du disque d'entraînement (26).

13. Agencement d'entraînement selon la revendication 12, **caractérisé en ce que** l'au moins un élément élastique à ressort (53) du deuxième amortisseur d'oscillations de torsion (20) est réalisé de telle sorte que le piston d'actionnement (18) de l'actionneur de l'embrayage de sortie auxiliaire (1b) soit pressé dans sa position d'ouverture dans l'état non actionné par l'élément élastique à ressort (53).

14. Agencement d'entraînement selon l'une quelconque des revendications 1 à 13, **caractérisé en ce que** les dentures frontales (29, 30) présentent sur les segments annulaires (28) et sur le disque d'entraînement (26) des flancs de dents droits orientés axialement.

15. Agencement d'entraînement selon l'une quelconque des revendications 1 à 13, **caractérisé en ce que** les dentures frontales (29, 30) sur les segments annulaires (28) et sur le disque d'entraînement (26) présentent des flancs de dents obliques.

16. Agencement d'entraînement selon l'une quelconque des revendications 1 à 15, **caractérisé en ce que** la boîte de vitesses est réalisée sous forme d'une boîte de vitesses à groupe relais avec une boîte de vitesses à groupe relais intermédiaire (SP), une boîte de vitesses principale (HG) ainsi que le cas échéant une transmission à gamme (BG).

17. Agencement d'entraînement selon l'une quelconque des revendications 1 à 16, **caractérisé en ce que** la boîte de vitesses à groupe relais intermédiaire (SP) et la boîte de vitesses principale (HG) sont réunies structurellement et présentent un arbre d'entrée de boîte de vitesses commun (5), un arbre de boîte de vitesses principal (6) et deux arbres intermédiaires (31, 32) disposés parallèlement à celui-ci.
